# EUROPÄISCHE PATENTSCHRIFT

(11) **EP 0 832 702 B1**
(45) Veröffentlichungstag und Bekanntmachung des Hinweises auf die Patenterteilung: **13.12.2000**
(21) Anmeldenummer: 96810628.6
(22) Anmeldetag: 25.09.1996
(51) Int. Cl.: B21D 26/02

(54) **Verfahren zur Herstellung von Hohlkörpern**
Method for making hollow bodies
Méthode de fabrication de corps creux

(43) Veröffentlichungstag der Anmeldung: 01.04.1998
(73) Patentinhaber: Alusuisse Technology & Management AG, 8212 Neuhausen am Rheinfall (CH)
(72) Erfinder: Wehner, Frank, Dr., 78256 Steisslingen (DE); Springe, Gerd, Dr., 78337 Wangen/Oehningen (DE)

(56) Entgegenhaltungen:
- EP-A- 0 548 859
- DE-A- 1 959 999
- JP-A- 4 157 141
- JP-A- 4 167 931
- JP-A- 4 187 325
- JP-A- 8 197 152
- US-A- 4 269 053
- PATENT ABSTRACTS OF JAPAN vol. 016, no. 507 (M-1327), 20.Oktober 1992 & JP 04 187325 A (MITSUBISHI HEAVY IND LTD), 6.Juli 1992,
- PATENT ABSTRACTS OF JAPAN vol. 016, no. 449 (C-0986), 18.September 1992 & JP 04 157141 A (MITSUBISHI HEAVY IND LTD), 29.Mai 1992,
- PATENT ABSTRACTS OF JAPAN vol. 016, no. 467 (M-1317), 29.September 1992 & JP 04 167931 A (MITSUBISHI HEAVY IND LTD), 16.Juni 1992,

## Beschreibung

Vorliegende Erfindung betrifft ein Verfahren zur Herstellung von Hohlkörpern durch Umformen eines Vorformlings aus einem Längshohlkörper oder aus Blechen aus Aluminium oder dessen Legierungen durch ein Innenhochdruckverfahren, in einem Werkzeug, sowie die Verwendung des Verfahrens.

Es ist bekannt, Bleche aus Metall durch superplastisches Umformen zu verformen. Um unterschiedliche Materialdehnungen während des Umformens auszugleichen wird in der CH 673 603 vorgeschlagen, lokal, während des Verformens das Blech zu kühlen.

In der US 4,269,053 wird ein Verfahren zur superplastischen Umformung von Strukturen beschrieben, wobei eine Vorform gegen ein formgebendes Teil gepresst wird. Das formgebende Teil weist unterschiedliche Reibungskoeffizenten auf. Entsprechend kann das Material der Vorform leichter expandieren und es resultiert eine gleichmässigere Dickenverteilung in der endgültigen Struktur.

Vorbedingungen zu diesen Verfahren sind, dass beispielsweise die Werkzeuge mit Kühlmediumeinlässen ausgerüstet werden müssen, resp. Drittstoffe als Zwischenschicht in das Werkzeug eingebracht werden müssen.

Die Druckschrift EP 0 548 859 A1 (nächstliegender Stand der Technik) beschreibt ein Innenhochdruckumformverfahren zur Herstellung von Fahrwerksteilen aus Aluminium für Kraftfahrzeuge, wobei anstelle der stranggepressten Rohre, längsnahtgeschweisste Rohre aus einer naturharten oder aushärtbaren Aluminiumlegierung für das Innenhochdruckumformen verwendet werden.

Die Druckschrift JP-A-4167931 beschreibt eine Methode zur Kontrolle der Wanddicken der Werkstoffe bei superplastischem Umformen. Das Formwerkzeug weist dazu Oberflächen unterschiedlicher Reibung auf, wodurch der Reibungskoeffizient zwischen Werkzeug und Werkstoff und somit der Materialfluss des Werkstoffes beeinflusst wird.

Bei der superplastischen Umformung wird das umzuformende Blech in einer Kammer eingespannt und auf Umformtemperatur gebracht. Diese liegt für Aluminiumlegierung etwa zwischen 450 und 550°C. Die Ausformung des Bleches erfolgt mittels Druckluft in eine in der Kammer angeordnete Gegenform. Die hierbei während des Umformens zwangsläufig auftretenden lokal unterschiedlichen Materialdehnungen führen zu reduzierten Materialquerschnitten in diesen übermässig beanspruchten Bereichen. Diese lokal begrenzten Materialeinschnürungen bewirken in der Folge eine bevorzugte Konzentration der weiteren Materialdehnung auf diese Bereiche.

Bei der Innenhochdruckumformung wird ein Vorformling in ein geteiltes Werkzeug eingeführt und das geteilte Werkzeug wird geschlossen, während zwei seitliche Druckstücke mit horizontal wirkende Stösseln eingefahren werden. Nach dem Füllen des Rohrstückes mit dem Druckmedium und erfolgter Impulsgabe für das Hochdruck-Aggregat wird der eigentliche Umformvorgang eingeleitet. Der hohe Innendruck, der durch das Druckmedium auf den Vorformling ausgeübt wird, fallweise in Verbindung mit dem überlagerten Axial-Druck bewirken, dass sich der Vorformling präzise an die Innenkontur des Werkzeuges anlegt. Es ist auch möglich, durch axiales Stauchen im Zuge des Aufweitens begrenzte Materialmengen nachzuliefern.

Angesichts dieser Gegebenheiten hat sich der Erfinder das Ziel gesetzt, ein Verfahren der eingangs erwähnten Art bereitzustellen welches der Tendenz zur lokal unterschiedlichen Materialdehnung entgegenwirkt und dadurch einen höheren maximalen Umformungsgrad und eine Steuerung der Materialdicken über die Dehnung ermöglicht.

Zur Lösung der gestellten Aufgabe führt, dass der Vorformling lokal, vor dem Umformprozess, an den Stellen hoher Dehnung während dem Umformprozess, während einem Zeitintervall von 1 Sekunde bis 300 Sekunden erhöhten Temperaturen von 250° C bis 450° C ausgesetzt wird.

Der Vorformling kann ein Blech sein, dass in das Werkzeug eingeformt wird. Der Vorformling kann ein Längshohlkörper sein, wie z.B. ein Rohr, runden, ovalen oder polygonalen Querschnittes. Der Längshohlkörper kann eine oder mehrere, z.B. zwei, drei, vier etc. längslaufende Hohlkammern aufweisen. Entsprechend den Konturen des fertigen Hohlkörpers kann das Rohr bereits Ein- oder Ausformungen, wie z.B. napfförmige Ein- oder Ausformungen aufweisen.

Anstelle eines Rohres kann auch von zwei gleich oder ähnlich grossen Blechen ausgegangen werden, die fallweise auch randständig verschweisst sein können, und dass Druckmedium kann z.B. mittels eines Spaltmeissels zwischen die Bleche gepresst und die Bleche ausgeweitet werden. Die Bleche oder Rohre können bereits lokale Materialanhäufungen oder Material verdünnungen aufweisen.

Zweckmässig werden nach vorliegendem Verfahren Vorformlinge aus einer kaltverfestigten oder aushärtbaren Aluminium-Legierung lokal einem Weichglühen ausgesetzt wird.

Der Begriff Aluminium im Zusammenhang mit den Vorformlingen bezieht sich neben Ausführungsformen aus technischen bis reinen Aluminiumqualitäten, insbesondere auch die Aluminiumlegierungen. Bevorzugte Aluminiumlegierungen sind nachfolgend aufgeführt.

Zweckmässig sind Vorformlinge nach vorliegender Erfindung, aus einem Aluminium der Reihe der thermisch härtbaren Aluminiumlegierungen oder der Reihe der AlMg-Legierungen.

Bevorzugt sind Vorformlinge aus einem Aluminium der Reihe der thermisch härtbaren Aluminiumlegierungen des Types AlMgSi oder AlZnMg und vorzugsweise AlZn_{4,5}Mg₁, oder einem Aluminium der Reihe der AlMg-Legierungen, vorzugsweise AlMg₃ oder AlMg_{4,5}Mn oder aus kaltverfestigten oder aushärtbaren Legierungen, wie Legierungen des Types AlCuMg, AlCuSiMn, AlMnSi, AlZnMg oder AlZnMgCu.

Nach dem erfindungsgemässen Verfahren werden die Vorformlinge aus Aluminium gefertigt und lokal, d.h. in wenigstens einem lokal begrenzten Bereich, während einem Zeitintervall von 1 Sekunde bis 300 Sekunden, erhöhten Temperaturen von 250°C bis 450°C ausgesetzt.

Bevorzugt werden der lokal begrenzte Bereich oder die lokal begrenzten Bereiche während einem Zeitintervall von 5 Sekunden oder länger den erhöhten Temperaturen ausgesetzt. Bevorzugt werden der Bereich oder die Bereiche während einem Zeitintervall von 60 Sekunden oder weniger, vorzugsweise während weniger als 30 Sekunden, den erhöhten Temperaturen ausgesetzt.

In anderer vorzugsweiser Ausführungsform werden der lokal begrenzte Bereich oder die lokal begrenzten Bereiche während dem Zeitintervall von 1 bis 300 sec Temperaturen von 300°C bis 450°C ausgesetzt.

Der Vorformling in Rohrform kann beispielsweise ein Strangpressprofil, ein Fliesspressteil oder ein Schmiedeteil sein. Bleche sind in der Regel Walzprodukte.

Der lokal begrenzte Bereich oder die lokal begrenzten Bereiche am Vorformling werden nach dem Verfahren der Erfindung wärmebehandelt. Der Bereich oder die Bereiche können gleichmässig oder ungleichmässig entsprechend dem Verformungsmuster, über den Vorformling verteilt sind. Mit dem Begriff lokal begrenzter Bereich können beispielsweise Bereiche, bezogen auf die Oberfläche, von beispielsweise in der Grössenordnung von 5 - 500 cm², bevorzugt 5 - 50 cm², angesehen werden.

Die Wärmebehandlung kann durch induktive Behandlung, konvektive Behandlung oder durch Wärmestrahlung erfolgen. Eine induktive Behandlung kann darin liegen, dass die behandelten Bereiche der Wirkung einer Induktionsspule ausgesetzt werden. Die konvektive Behandlung kann darin liegen, die zu behandelnden Bereiche einer Strömung eines erhitzten Mediums, beispielsweise erhitzter Gase, wie Luft oder Brenngasen auszusetzen und die Wärmestrahlung kann durch Infrarotgasbrenner oder durch elektrisch erzeugtes Infrarot erzeugt werden. Wichtiges Merkmal des Verfahrens ist, dass die Wärmebehandlung sich auf die Bereiche beschränkt und nicht durch Wärmeleitung sich der ganze Vorformling erwärmt.

Durch die Wärmebehandlung, d.h. durch das lokale Weichglühen, insbesondere von kaltverfestigten oder aushärtbaren Legierung, kann das Fliessen des Werkstoffes des Vorformlings lokal gesteuert werden. Es wird beispielsweise die Dehnung des Materials soweit erhöht, dass das geforderte Fliessverhalten voll erreicht wird.

Wird die Umformung mittels eines Werkzeuges mit lokalen Oberflächenbeschaffenheiten hoher Reibung ausgeführt, kann das die Oberflächenbeschaffenheit hoher Reibung ein Rauhigkeitsmuster an der verformungswirksamen Oberfläche des Werkzeuges sein. Das Rauhigkeitsmuster kann sich insbesondere an den Stellen befinden, an denen eine geringe Fliessgeschwindigkeit des Vorformlings gewünscht wird. Das Rauhigkeitsmuster kann beispielsweise eine Aufrauhung an Teilen der Oberfläche des Werkzeuges sein oder es kann ein Einsatz in einer Ausnehmung des Werkzeuges sein. Der Einsatz kann aus einem anderen Material als das Werkzeug gebildet sein. Beispielsweise können dies Materialpaarungen, wie Metall/Metall-, Metall/Keramik- oder Keramik/Keramik-Paarungen sein. Das Rauhigkeitsmuster kann beispielsweise eine durch partiellen chemischen oder physikalischen Materialabtrag, wie Ätzen, Sandstrahlen, Funkenerosion, Gravieren usw. erzeugt werden oder es kann durch Aufbringen von Beschichtungen an den Teilbereichen des Werkzeuges angebracht werden.

Durch verschiedene Materialien an der verformungswirksamen Oberfläche des Werkzeuges, wie z.B. Metalloberflächen und Keramikoberflächen, kann ebenfalls ein partielles Rauhigkeitsmuster erzeugt werden. Solche partiellen Oberflächen aus Keramik können beispielsweise Siliciumcarbid- oder Korundoberflächen sein. Durch die partiell erhöhte Reibung des Vorformlings an der Werkzeugwandung kann eine Fliessbehinderung erzielt werden. dadurch können andere Bereiche bevorzugt fliessen, die sonst, z.B. wegen höherer Wanddicke, nur verzögert verformen.

In anderer Ausführungsform kann der Vorformling mittels eines Werkzeuges mit lokalen Oberflächenbeschaffenheiten niedriger Reibung in Form von geglätteten Oberflächenteilen oder Oberflächenteilen aus Metallen oder Keramik, wie Chrom oder Bomitrid, eingeformt werden. An den geglätteten Oberflächenteilen des Werkzeuges kann lokales Fliessen des Vorformlings gefördert werden.

Das Glätten der Oberflächen, insbesondere von Werkzeugoberflächen aus Metall, kann z.B. durch Polieren oder durch Beschichten mit einem glättenden Werkstoff, erfolgen.

Selbstverständlich können in einem Werkzeug auch lokale Oberflächenteile sich durch eine hohe Reibung und andere lokale Oberflächenteile sich durch eine niedrige Reibung auszeichnen. Das erfindungsgemässe Verfahren kann beispielsweise derart ausgeführt werden, dass der Vorformling mittels eines Werkzeuges verformt wird, welches im Bereich hoher Dehnung lokale Oberflächenbeschaffenheiten hoher Reibung, in Form eines Rauhigkeitsmusters, und welches im Bereich niedriger Dehnung lokale Oberflächenbeschaffenheiten niedriger Reibung, in Form von geglätteten Oberflächenteilen, aufweist.

Ebenso können die Verfahren des Weichglühens des Vorformlings und die Anwendung eines Werkzeuges mit unterschiedlichen lokalen Oberflächenbeschaffenheiten kombiniert werden.

Die Vorformlinge können mit dem erfindungsgemässen Verfahren zu Hohlkörpern verarbeitet werden. Die Hohlkörper können weiter bearbeitet oder direkt verwendet werden. Verwendung finden die, fallweise weiterbearbeiteten, Hohlkörper beispielsweise als Konstruktionselemente im Fahrzeugbau. Beispiele von Konstruktionselementen sind Teile des Fahrwerkes und der Karosserie von Automobilen, wie Aufhängungsteile, Achsen, Achschenkel, Radführungselemente, Längs- und Querträger, Quer-, Schräg- oder Längslenker, Hilfsrahmen oder Teile davon, Rahmenteile von Türen, Hauben und Deckeln, Rahmenteile des Aufbaues, des Armaturenträgers, Träger für Hilfsaggregate, Befestigungsteile für Sitze, sicherheitsrelevante Teile in und an der Karosserie, Aufprallträger z.B. in den Türen und im Front- und Heckbereich.

## Patentansprüche

1. Verfahren zur Herstellung von Hohlkörpern durch Umformen eines Vorformlings aus einem Längshohlkörper oder aus Blechen aus Aluminium oder dessen Legierungen durch ein Innenhochdruckverfahren, in einem Werkzeug,
dadurch gekennzeichnet, dass
der Vorformling lokal, vor dem Umformprozess, an den Stellen hoher Dehnung während dem Umformprozess, während einem Zeitintervall von 1 Sekunde bis 300 Sekunden erhöhten Temperaturen von 250° C bis 450° C ausgesetzt wird.

2. Verfahren nach Anspruch 1, dadurch gekennzeichnet, dass der Vorformling aus einer kaltverfestigten oder aushärtbaren Aluminium-Legierung ist.

3. Verfahren nach Anspruch 1, dadurch gekennzeichnet, dass der Vorformling während einem Zeitintervall von 5 bis 60 Sekunden und vorzugsweise von 5 bis 30 Sekunden erhöhten Temperaturen ausgesetzt wird.

4. Verfahren nach Anspruch 1, dadurch gekennzeichnet, dass der Vorformling an einem lokal begrenzten Bereich oder an lokal begrenzten Bereichen mit einer Oberflächengrösse von 5 - 500 cm², bevorzugt von 5 - 50 cm², erhöhten Temperaturen ausgesetzt wird.

5. Verfahren nach Anspruch 1, dadurch gekennzeichnet, dass der Vorformling mittels eines Werkzeuges verformt wird, welches im Bereich hoher Dehnung lokale Oberflächenbeschaffenheiten hoher Reibung, in Form eines Rauhigkeitsmusters, und welches im Bereich niedriger Dehnung lokale Oberflächenbeschaffenheiten niedriger Reibung, in Form von geglätteten Oberflächenteilen, aufweist.

6. Verfahren nach Anspruch 1, dadurch gekennzeichnet, dass die Vorformlinge aus Legierungen des Types AlMg, AlCuMg, AlCuSiMn, AlMgSi, AlZnMg oder AlZnMgCu bestehen.

7. Verwendung des Verfahrens nach einem der Ansprüche 1 bis 6 zur Herstellung von Hohlkörper als Konstruktionsteile im Fahrzeugbau, zweckmässig im Automobilbau.

## Claims

1. Method of producing hollow articles by forming a preform consisting of a longitudinal hollow article or of sheets of aluminium or alloys thereof by a high internal pressure process in a tool, characterised in that the preform is subjected locally to elevated temperatures of 250°C to 450°C for an interval of 1 second to 300 seconds prior to the forming process at the points of high elongation during the forming process.

2. Method according to claim 1, characterised in that the preform consists of a cold-hardened or age-hardenable aluminium alloy.

3. Method according to claim 1, characterised in that the preform is subjected to elevated temperatures for an interval of 5 to 60 seconds and preferably 5 to 30 seconds.

4. Method according to claim 1, characterised in that the preform is subjected to elevated temperatures in a locally delimited region or locally delimited regions with a surface area of 5 - 500 cm², preferably 5 - 50 cm².

5. Method according to claim 1, characterised in that the preform is formed by means of a tool provided in the region of high elongation with a local high-friction surface finish in the form of a roughness pattern, and in the region of low elongation with a local low-friction surface finish in the form of smoothed surface parts.

6. Method according to claim 1, characterised in that the preforms consists of alloys of the type AlMg, AlCuMg, AlCuSiMn, AlMgSi, AIZnMg or AlZnMgCu.

7. Use of the method according to one of claims 1 to 6 for the production of hollow articles as structural parts in vehicle construction, advantageously in car construction.

## Revendications

1. Procédé de fabrication de corps creux par formage d'une ébauche constituée par un corps creux longitudinal ou par des tôles d'aluminium ou de ses alliages par un procédé à haute pression interne, dans un outil, caractérisé en ce que l'ébauche est exposée localement, avant le processus de formage, à des températures augmentées de 250°C à 450°C pendant un intervalle de temps de 1 s à 300 s au niveau des endroits de grand allongement pendant le processus de formage.

2. Procédé selon la revendication 1, caractérisé en ce que l'ébauche est constituée par un alliage d'aluminium consolidé à froid ou durcissable.

3. Procédé selon la revendication 1, caractérisé en ce que l'ébauche est exposée à des températures augmentées pendant un intervalle de temps de 5 à 60 s et de préférence de 5 à 30 s.

4. Procédé selon la revendication 1, caractérisé en ce que l'ébauche est exposée à des températures augmentées au niveau d'un domaine limité localement ou au niveau de domaines limités localement ayant une superficie de 5-500 cm², de préférence de 5-50 cm².

5. Procédé selon la revendication 1, caractérisé en ce que l'ébauche est mise en forme au moyen d'un outil qui présente, dans le domaine de grand allongement, des caractéristiques superficielles locales de grand frottement, sous forme d'une configuration de rugosité, et qui présente, dans le domaine de faible allongement, des caractéristiques superficielles locales de faible frottement, sous forme de parties superficielles rendues lisses.

6. Procédé selon la revendication 1, caractérisé en ce que les ébauches consistent en alliages du type AlMg, AlCuMg, AlCuSiMn, AlMgSi, AlZnMg ou AlZnMgCu.

7. Utilisation du procédé selon l'une des revendications 1 à 6 pour la fabrication de corps creux sous forme de pièces de construction dans la construction des véhicules, judicieusement dans la construction des véhicules automobiles.
